# EUROPEAN PATENT APPLICATION

(11) **EP 2 903 202 A1**
(43) Date of publication of application: **05.08.2015**
(21) Application number: 12885704.2
(22) Date of filing: 28.09.2012
(51) Int. Cl.: H04L 9/10

(54) **INFORMATION PROCESSING DEVICE AND SEMICONDUCTOR DEVICE**

(71) Applicant: Fujitsu Limited, Kawasaki-shi, Kanagawa 211-8588 (JP)
(72) Inventor: KOHIYAMA, Kiyoshi, Kawasaki-shi Kanagawa 211-8588 (JP)
(74) Representative: Ward, James Norman
(86) International application number: PCT/JP2012/075081
(87) International publication number: WO 2014/049830

(57) **Abstract**

To provide versatile information processing apparatus and semiconductor device with key leakage protection.

An information processing apparatus (1) includes a secure module (10) and a control circuit (20) provided external to the secure module (10) and configured to input encrypted data (4) to the secure module (10) through a communication channel (2). The secure module (10) includes memory (12), a control circuit (13), and an input unit (11). The memory (12) does not allow the control circuit (20) to read and write data therefrom and thereto, and stores a key (6) for decrypting the encrypted data (4). The control circuit (13) decrypts the encrypted data (4) using the key (6) and outputs the decrypted data to the control circuit (20) through the communication channel (2). The input unit (11) stores, in the memory (12), the key (6) input through a communication channel (3) provided separately from the communication channel (2).

## Description

### Technical Field

The embodiments discussed herein are related to an information processing apparatus and a semiconductor apparatus.

### Background Art

Specifications of some software, like operating systems (OS), and interfaces are released to the public, and those of others are kept confidential. Specifications being released to the public encourage development of software supporting the specifications, resulting in the supply of many good software products to users. However, because the specifications are open to the public, such software is vulnerable to tampering, snooping, spoofing or the like by malicious third parties.

In recent years, semiconductors provided with a tamper resistant module (TRM) structure have become prevalent as a technique to prevent such harm. The tamper resistant module structure is designed to prevent information stored in a semiconductor, such as an integrated circuit, from being referred to from outside. Some tamper resistant modules have, for example, a structure in which a strong, adhesive material is coated on the inside of an integrated circuit and the internal circuit is destroyed if the coating is removed. In this way, information inside the semiconductor is protected by physically preventing snooping and tampering. A semiconductor with such a TRM structure is sometimes called "secure module" or "secure large scale integration (LSI)".

The following are also techniques for enhancing security of open-architecture information processing apparatuses. One proposed technique is, for example, directed to a secure module that reads a code or the like of secure software stored in main memory by direct access and checks tampering of the secure software by comparing the read code with information stored in advance. Another proposed technique is directed to a secure module that provides predetermined information to decrypting means for decrypting encryption using a key, and make the key available for the decrypting means when having determined the validity of the decrypting means by referring to a reply returned from the decrypting means in response to the provision of the predetermined information, but does not provide the key for the decrypting means if the validity is not determined.

### Citation List

Patent Literature
PTL1: Japanese Laid-open Patent Publication No. 2004-96666
PTL2: Japanese Laid-open Patent Publication No. 2004-129227
PTL3: Japanese Laid-open Patent Publication No. 2003-198527

### Summary of Invention

### Technical Problem

As for transferring confidential data between computers, it is a common practice to distribute the data being encrypted. In this case, the encrypted data is decrypted using a predetermined key to thereby make the confidential data readable.

However, in the case where a key for decrypting encrypted data is acquired or stored in the above-described environment using software and interfaces whose specifications have been released to the public, the key may be leaked, for example, through the tampering of software. On the other hand, a secure module being in charge of a series of processes for handling a key, such as key acquisition and storage, results in a decrease in the freedom of software development, which in turn decreases the versatility of an apparatus equipped with the secure module. In addition, only a predetermined key is allowed to be used, thus further decreasing the versatility of the apparatus.

One aspect of the embodiments aims at providing versatile information processing apparatus and semiconductor apparatus with key leakage protection.

### Solution to Problem

According to an aspect, there is provided an information processing apparatus including a secure module; and a first control circuit provided external to the secure module and configured to input encrypted data to the secure module through a first communication channel. The secure module includes a memory configured not to allow the first control circuit to read and write data therefrom and thereto and to store a key for decrypting the encrypted data, a second control circuit configured to decrypt the encrypted data using the key and output the decrypted data to the first control circuit through the first communication channel, and an input unit configured to store, in the memory, the key input through a second communication channel provided separately from the first communication channel.

### Advantageous Effects of Invention

According to one aspect, versatile information processing apparatus and semiconductor apparatus with key leakage protection are provided.

These and other objects, features and advantages of the present invention will become apparent from the following detailed description of illustrative embodiments thereof, which is to be read in connection with the accompanying drawings.

### Brief Description of Drawings

[FIG. 1] FIG. 1 illustrates an information processing apparatus according to a first embodiment.
[FIG. 2] FIG. 2 illustrates an information processing system according to a second embodiment.
[FIG. 3] FIG. 3 is a block diagram illustrating an example of hardware of a terminal.
[FIG. 4] FIG. 4 is a block diagram illustrating an example of hardware of a secure input unit.
[FIG. 5] FIG. 5 is a block diagram illustrating a configuration example of functions provided for the terminal.
[FIG. 6] FIG. 6 illustrates an example of a sequence of a distributed content reproduction process.
[FIG. 7] FIG. 7 illustrates the example of the sequence of the distributed content reproduction process, continuing from FIG. 6.
[FIG. 8] FIG. 8 illustrates an example of a sequence of a work key acquisition process.
[FIG. 9] FIG. 9 illustrates an example of a sequence of a broadcast content reproduction process.
[FIG. 10] FIG. 10 illustrates an example of a list of exclusive-use operation codes.
[FIG. 11] FIG. 11 illustrates an example of a sequence of an operation code list replacement process.
[FIG. 12] FIG. 12 is a flowchart illustrating an example of a process of externally saving confidential information.
[FIG. 13] FIG. 13 is a flowchart illustrating an example of a process of reading the confidential information.
[FIG. 14] FIG. 14 illustrates an example of restructuring program codes.
[FIG. 15] FIG. 15 illustrates an example of mutual authentication with a program.

### Description of Embodiments

Several embodiments will be described below with reference to the accompanying drawings, wherein like reference numerals refer to like elements throughout.

### First Embodiment

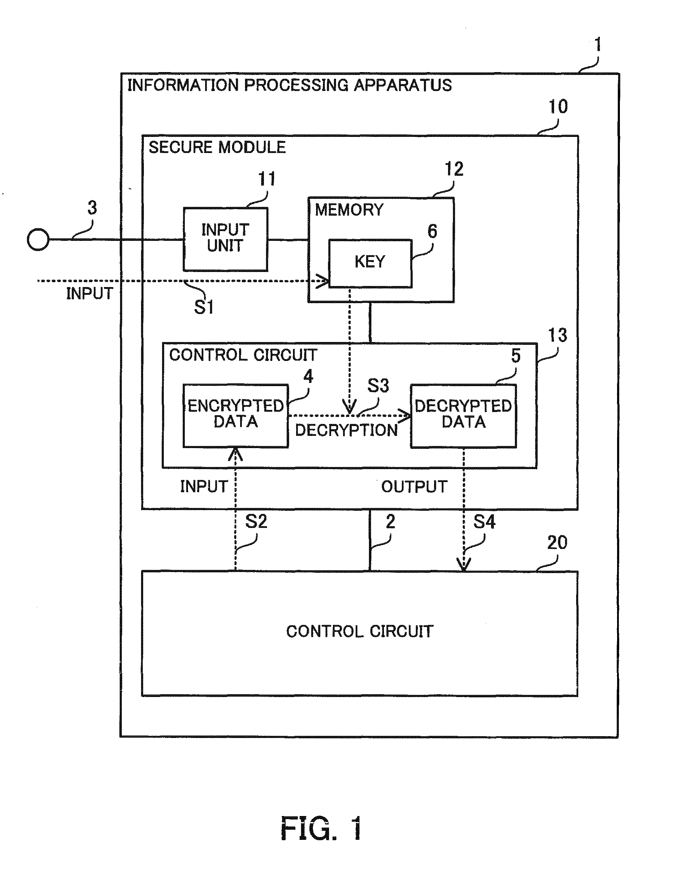

FIG. 1 illustrates an information processing apparatus according to a first embodiment. An information processing apparatus 1 is a computer having a function of decrypting encrypted data using a key. The information processing apparatus 1 is, for example, a tablet, notebook, or desktop personal computer (PC), or a portable information terminal with mobile phone function.

The information processing apparatus 1 includes a secure module 10 and a control circuit 20 (first control circuit) disposed outside of the secure module 10. The secure module 10 and the control circuit 20 are, for example, implemented as semiconductor devices mounted on a single substrate. In addition, the secure module 10 is provided with a communication channel 2 (first communication channel) and a communication channel 3 (second communication channel), and the communication channel 2 is used to input and output data between the control circuit 20 and the secure module 10.

The control circuit 20 exercises overall control of the information processing apparatus 1 and is configured, for example, as a processor such as a central processing unit (CPU). In this case, the control circuit 20 executes an operating system whose software structure or specifications of interfaces and the like have been released to the public, and also executes application programs supporting the specifications of the operating system. Such application programs to be executed are freely developed according to the publicly released specifications of the operating system. This improves the versatility of the information processing apparatus 1.

The control circuit 20 inputs data being encrypted (hereinafter referred to as "encrypted data 4") to the secure module 10 via the communication channel 2, and also receives data being decrypted ("decrypted data 5") from the secure module 10 via the communication channel 2. These processes by the control circuit 20 are implemented, for example, by the control circuit 20 executing an application program described above.

The control circuit 20 reads the encrypted data 4, for example, from a storage device (not illustrated) connected to the control circuit 20 and then inputs it to the secure module 10. Alternatively, the control circuit 20 may receive the encrypted data 4 from a transmission apparatus external to the information processing apparatus 1 and then input it to the secure module 10.

The secure module 10 is a hardware unit with, for example, a TRM structure implementing a function of preventing external snooping and data tampering. The secure module 10 includes an input unit 11, memory 12, and a control circuit 13 (second control circuit).

The memory 12 is a non-volatile storage device configured not to allow the control circuit 20 external to the secure module 10 to read and write data therefrom and thereto. For example, the control circuit 20 is able to communicate with the secure module 10 using only predetermined commands. In this case, by not providing the control circuit 20 with commands for requesting reading and writing data from and to the memory 12, the control circuit 20 is prohibited from reading and writing data from and to the memory 12.

The memory 12 stores therein various types of data used in processing of the secure module 10, such as confidential information handled by the secure module 10. An example of such confidential information stored in the memory 12 is a key 6 used to decrypt the encrypted data 4.

The control circuit 13 decrypts the encrypted data 4 input from the control circuit 20 via the communication channel 2, using the key 6 stored in the memory 12. The control circuit 13 outputs the decrypted data 5 to the control circuit 20 via the communication channel 2. Note here that the storage of the key 6 and the decryption process using the key 6 take place inside the secure module 10. This reduces the possibility of the key 6 being read to the control circuit 20 and leaked outside the information processing apparatus 1, thus improving the security of the key 6.

Note that the control circuit 13 is implemented, for example, using a processor such as a CPU or a digital signal processor (DSP), or another electronic circuit such as an application specific integrated circuit (ASIC) or a field programmable gate array (FPGA). Alternatively, the control circuit 13 may be implemented using a plurality of electronic circuits such as a processor and a decryption circuit. In the case where the control circuit 13 is provided with a processor, the processor is, for example, allowed to execute an exclusive-use program executable only on the secure module 10. This reduces the possibility of processing procedures of the control circuit 13 being tampered with and the key 6 being leaked.

To the input unit 11, the communication channel 3 is connected. The communication channel 3 is a channel for inputting confidential information to the secure module 10, and the input unit 11 stores, in the memory 12, the confidential information input via the communication channel 3. The key 6 is an example of the confidential information input through the communication channel 3 to the memory 12 via the input unit 11.

The communication channel 3 is provided separately from the communication channel 2 connecting the control circuit 20 and the secure module 10. This allows the input unit 11 to input the confidential information, including the key 6, to the memory 12 without involving the processing of the control circuit 20 subject to tampering. Therefore, it is possible to store confidential information in the memory 12 through the safe and secure process, separate from the processing of the control circuit 20, at least after the production of the memory 12.

Note that the input unit 11 is implemented by a predetermined electronic circuit. For example, the input unit 11 is provided with a circuit for performing authentication based on credentials input via the communication channel 3. When the authentication is successful, the input unit 11 allows confidential information input subsequently to be stored in the memory 12.

FIG. 1 illustrates a structure where confidential information is input directly from the input unit 11 to the memory 12; however, confidential information input via the communication channel 3 may be passed from the input unit 11 through the control circuit 13 and then stored in the memory 12.

Next described is an example of processing performed by the information processing apparatus 1.

First, the input unit 11 stores, in the memory 12, the key 6 input via the communication channel 3 (step S1). The process of storing the key 6 is allowed to take place at a point in time at least after the production of the memory 12. For example, the key 6 is allowed to be stored in the memory 12 at any point in time from the time the produced memory 12 is mounted on the secure module 10 to just before the information processing apparatus 1 equipped with the secure module 10 and the control circuit 20 leaves a factory, or just before the information processing apparatus 1 is sold to a user. Herewith, it is possible to store, in the memory 12, the appropriate key 6 tailored to the type of services provided for the marketed information processing apparatus 1, thus improving the versatility of the information processing apparatus 1.

Note that the communication channel 3 may be detachable. In this case, input of confidential information to the secure module 10 may be prohibited by detaching the communication channel 3.

Next, the control circuit 20 inputs the encrypted data 4 to the control circuit 13 via the communication channel 2 (step S2).

In this regard, the control circuit 20 may have a function to decrypt encrypted content data including image data or audio data and then reproduce and output the decrypted content data. In this case, the encrypted data 4 may be a content key to decrypt the encrypted content data. For example, in the case where a service offering a plurality of content data pieces to the information processing apparatus 1 is provided, a content key is prepared for each content data piece. In this case, the key 6 stored in the memory 12 may be information associated with a user, or the like, to which the service is provided.

Next, the control circuit 13 reads the key 6 from the memory 12 and decrypts the encrypted data 4 input from the control circuit 20 using the read key 6 (step S3). The control circuit 13 outputs the decrypted data 5 obtained from the decryption to the control circuit 20 via the communication channel 2 (step S4). The control circuit 20 is able to execute a predetermined process using the received decrypted data 5.

The decryption process using the key 6 here may be a decryption process using the key 6 itself as a decryption key. This is, for example, the case where the key 6 is a secret key and the encrypted data 4 has been encrypted by a public key corresponding to the secret key.

In addition, in the case where the control circuit 20 receives the encrypted data 4 from a transmission apparatus external to the information processing apparatus 1, the following process may also be regarded as the decryption process using the key 6. That is, the control circuit 13 communicates with the transmission apparatus via the control circuit 20 and performs mutual authentication with the transmission apparatus using the key 6. When the mutual authentication is successful, the control circuit 13 receives, via the control circuit 20, the encrypted data 4 having been encrypted using a temporary key temporarily generated during the mutual authentication and then decrypts the received encrypted data 4 using the temporary key as the decryption key.

In steps S2 to S4 above, the control circuit 20 executes the process of acquiring the encrypted data 4 and supplying it to the secure module 10 and the process of receiving and using the decrypted data 5 obtained by decryption. It is possible to achieve these processes, for example, using an application program developed according to the publicly released specifications of the operating system, therefore improving the versatility of the information processing apparatus 1. On the other hand, because the control circuit 20 plays no role in processes directly using the key 6, the probability of the key 6 being leaked to outside is reduced, thus improving the security of the key 6. Further, the input unit 11 is able to store the key 6 in the memory 12 by the process where the control circuit 20 is not involved. Thus, it is possible to achieve the versatile information processing apparatus 1 preventing the key 6 from being leaked.

### Second Embodiment

Next described is a terminal according to a second embodiment, configured to manage a content key for decrypting content being encrypted (hereinafter referred to as the "encrypted content") using a secure LSI. The term "content" in the second embodiment refers to information including image and audio information, and is, for example, information of a television program, a movie, a video game or the like. In the second embodiment, content is being compressed in a format, such as the Moving Picture Experts Group (MPEG) format or the H.264 format.

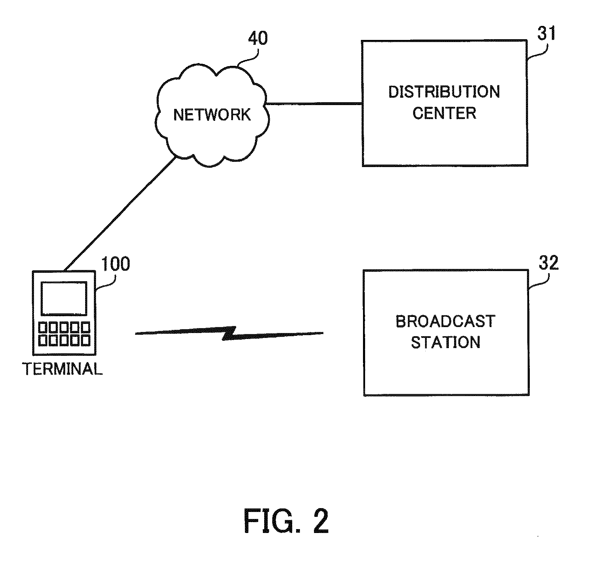

FIG. 2 illustrates an information processing system according to the second embodiment. A terminal 100 is connected to a distribution center 31 via a network 40. The terminal 100 is able to have a two-way communication with the distribution center 31. In addition, the terminal 100 receives airwaves transmitted from a broadcast station 32. Because the communication with the broadcast station 32 is through airwaves, the terminal 100 is able to establish only a one-way communication with the broadcast station 32 to receive information therefrom.

The terminal 100 has a function of reproducing and outputting content. The terminal 100 may be a portable terminal, such as a tablet personal computer. The terminal 100 is provided with a secure LSI having a TRM structure. The terminal 100 receives encrypted content from the distribution center 31 and the broadcast station 32.

To decrypt encrypted content received from the distribution center 31 with which two-way communication is available, the terminal 100 uses a content key received from the distribution center 31. When receiving the content key, the terminal 100 performs mutual authentication with the distribution center 31 using confidential information (for example, a secret key) of the terminal 100. The confidential information of the terminal 100 is stored in the secure LSI in order to prevent external snooping and tampering. When the mutual authentication is successful, the terminal 100 is able to receive the content key from the distribution center 31.

On the other hand, to decrypt encrypted content received from the broadcast station 32 with which only one-way communication is available, the terminal 100 uses a content key, a work key, and a master key.

The content key is periodically (for example, every few seconds) updated by the broadcast station 32. The updated content key is encrypted by the broadcast station 32. Hereinafter, a content key being encrypted is referred to as the encrypted content key. The encrypted content key is periodically transmitted together with encrypted content corresponding to the content key from the broadcast station 32 to the terminal 100 via airwaves.

The work key is a decryption key corresponding to the encrypted content key. The work key is unique to each broadcast station, and is periodically (for example, every month) updated by the broadcast station 32. The updated work key is encrypted by the broadcast station 32. Hereinafter, a work key being encrypted is referred to as the encrypted work key. The encrypted work key is periodically transmitted from the broadcast station 32 to the terminal 100 via airwaves. Note however that the update cycle of the work key is longer than that of the content key.

The master key is a decryption key corresponding to the encrypted work key. The master key is specific to and held by each terminal. The master key is stored in a storage device in the secure LSI of the terminal 100 in order to prevent external snooping and tampering. The master key may be a secret key of the terminal 100 or a common key shared with a device on the transmission side.

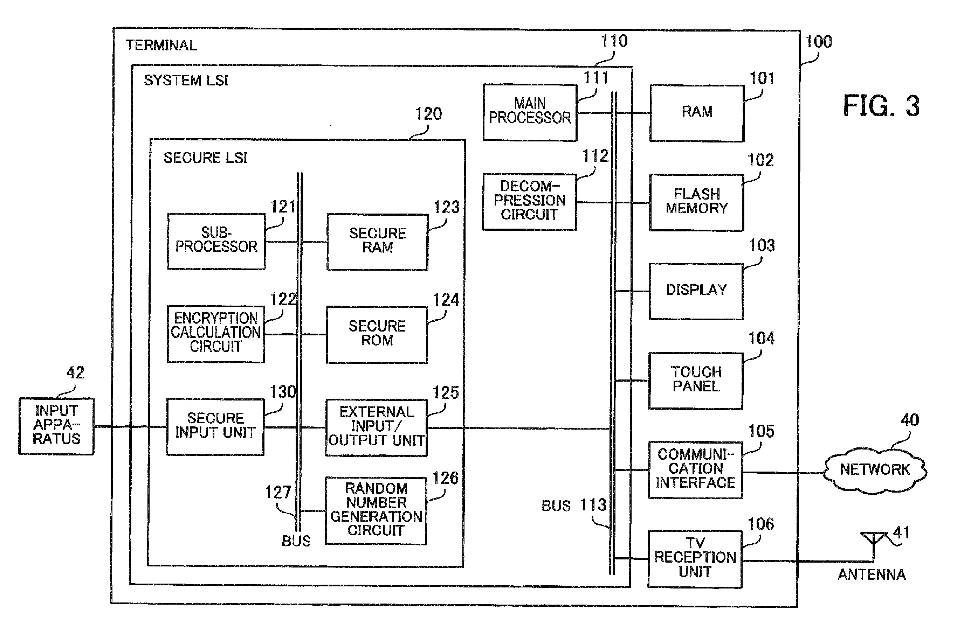

FIG. 3 is a block diagram illustrating an example of hardware of a terminal. The terminal 100 includes random access memory (RAM) 101, flash memory 102, a display 103, a touch panel 104, a communication interface 105, a TV reception unit 106, and a system LSI 110. The RAM 101, the flash memory 102, the display 103, the touch panel 104, the communication interface 105, the TV reception unit 106, a main processor 111, a decompression circuit 112, and a secure LSI 120 are connected to a bus 113 provided in the system LSI 110.

The system LSI 110 is an integrated circuit for exercising overall control of the terminal 100. The system LSI 110 includes the main processor 111, the decompression circuit 112, and the secure LSI 120.

The main processor 111 includes a computing unit for carrying out program instructions. The main processor 111 loads a program and at least part of data stored in the flash memory 102 into the RAM 101 to execute the program. Note that the main processor 111 may include a CPU or a DSP. Further, the main processor 111 may include a plurality of processor cores. In addition, the terminal 100 may include a plurality of processors. The terminal 100 may perform parallel processing using a plurality of processors or processor cores. A set of two or more processors, a dedicated circuit such as a FPGA or ASIC, a set of two or more dedicated circuits, or a combination of a processor and a dedicated circuit may be referred to as the "processor".

The decompression circuit 112 decompresses compressed data and outputs the decompressed data to the main processor 111. Examples of compression formats are MPEG and H.264, and the decompression circuit 112 may support any compression format.

For example, image data decompressed by the decompression circuit 112 is output to the display 103 via the main processor 111. Instead, the decompressed image data may be output directly from the decompression circuit 112 to the display 103 without the bus 113 and the main processor 111. In addition, the decompressed image data may be supplied to the display 103 while being encrypted by the High-bandwidth Digital Content Protection system (HDCP). Further, the image data being encrypted by the HDCP may be output to the outside of the terminal 100 via an image output interface (not illustrated).

The RAM 101 is volatile memory for temporarily storing therein programs to be executed by the main processor 111 and data to be referred to by the programs. Note that the terminal 100 may be provided with a different type of memory other than RAM, or may be provided with a plurality of volatile memory devices.

The flash memory 102 is a nonvolatile storage device to store therein programs, such as an operating system, firmware, and application software, as well as data. Note that the terminal 100 may be provided with a different type of storage device, such as a hard disk drive (HDD) or a solid state drive (SSD), or may be provided with a plurality of non-volatile storage devices.

The display 103 displays an image according to an instruction from the main processor 111. As the display 103, a liquid crystal display (LCD) or an organic electroluminescence (OEL) display may be used.

The touch panel 104 is disposed on the display 103, and detects a touch operation of a user on the display 103 and gives notice of a touched point to the main processor 111 as an input signal. The touch operation is performed by a pointing device, such as a stylus, or a finger of the user. There are various systems to detect the touch point and any system may be adopted, including the following: a matrix switch system; a resistive touch system; a surface acoustic wave system; an infrared system; an electromagnetic induction system; and a capacitance system.

The communication interface 105 communicates with a different computer (for example, the distribution center 31) via the network 40. The communication interface 105 may be a wired interface connected to a wired network, or a wireless interface connected to a wireless network.

The TV reception unit 106 includes a tuner, a demodulator, and the like, and takes airwaves received by an antenna 41 connected to the TV reception unit 106 to thereby acquire information indicating content of each broadcast channel.

Note that the programs to be executed by the main processor 111 may be copied to the flash memory 102 from a different storage device. Alternatively, these programs may be downloaded by the communication interface 105 from the network 40.

Amongst the hardware components included in the terminal 100 of FIG. 3, at least one of hardware components provided externally to the system LSI 110 and connected to the bus 113 may be disposed inside of the system LSI 110. For example, the RAM 101 and the flash memory 102 may be disposed inside of the system LSI 110.

With the above-described structure, the main processor 111 executes an operating system program whose specifications of interfaces and the like have been released to the public. Then, the main processor 111 executes an application program developed according to the specifications of the operating system program. Thus, by providing the terminal 100 with the main processor 111 configured to execute a program based on the publicly-released specifications, the versatility of the terminal 100 is increased.

Yet at the same time, there is a possibility that a program developed by a malicious person is executed by the main processor 111 or a program to be executed by the main processor 111 is tampered with. This means that, for example, there is a potential that information in a storage area of the RAM 101 or the flash memory 102 connected to the main processor 111 via the bus 113 is unintentionally read out externally or tampered with.

In view of these threats, the secure LSI 120 is configured as an integrated circuit having a TRM structure. The secure LSI 120 is connected to the main processor 111 via the bus 113; however, only specific and restricted processes are allowed to take place between the secure LSI 120 and the main processor 111. This prevents the information stored in the secure LSI 120 from being unintentionally leaked or tampered with.

The secure LSI 120 includes a sub-processor 121, an encryption calculation circuit 122, secure RAM 123, secure read only memory (ROM) 124, an external input/output unit 125, and a secure input unit 130. Each of these units is connected to a bus 127. The external input/output unit 125 is connected to the buses 113 and 127.

The sub-processor 121 includes a computing unit for carrying out program instructions in the secure LSI 120. The sub-processor 121 controls the individual units of the secure LSI 120.

The encryption calculation circuit 122 includes, for example, an encryption circuit for encrypting data and a decryption circuit for decrypting data. The encryption calculation circuit 122 carries out an encryption process or a decryption process according to an instruction from the sub-processor 121 and outputs the processing result to the sub-processor 121.

The secure RAM 123 is volatile memory for temporarily storing therein programs to be executed by the sub-processor 121 and data to be referred to by the programs. Note that the secure LSI 120 may be provided with a different type of volatile memory other than RAM, or may be provided with a plurality of volatile memory devices.

The secure ROM 124 is a non-volatile storage device for storing confidential information such as identification information of the terminal 100, a secret key, and a master key. The identification information of the terminal 100 is, for example, an identification number of the terminal 100. In addition, the secure ROM 124 may store therein exclusive-use programs to run only on the secure LSI 120. The exclusive-use programs are, for example, programs generated using operation codes executable only on the secure LSI 120.

Note that the secure ROM 124 here is a recordable non-volatile storage device like flash memory. In addition, the secure LSI 120 may be provided with a plurality of such non-volatile storage devices.

The external input/output unit 125 is connected to the bus 113, and inputs and outputs data from and to the main processor 111 via the bus 113. The external input/output unit 125 outputs data input from the main processor 111 to the sub-processor 121. In addition, the external input/output unit 125 outputs data input from the sub-processor 121 to the main processor 111.

Note that the sub-processor 121 is able to output data stored in the secure LSI 120 only through a path via the external input/output unit 125. For example, when the sub-processor 121 needs to transmit data to an apparatus (for example, the distribution center 31) external to the terminal 100, the sub-processor 121 first outputs the data to the main processor 111 via the external input/output unit 125. Then, the main processor 111 transmits the output data to the apparatus outside the terminal 100.

Note here that the information input from the main processor 111 to the sub-processor 121 via the external input/output unit 125 is limited only to preliminarily specified information, such as particular commands. When information other than the specified one is input from the external input/output unit 125, the sub-processor 121 ignores and discards the information. This enhances the security of the information stored in the secure LSI 120.

For example, commands output to the sub-processor 121 from the main processor 111 do not include those for reading data from storage areas inside the secure LSI 120, such as the secure RAM 123 and the secure ROM 124, and those for directly requesting data write to the storage areas. Therefore, it is not possible to perform read and write operations on the secure RAM 123 and the secure ROM 124 according to instructions from the main processor 111.

On the other hand, the programs executed by the sub-processor 121 of the secure LSI 120 do not include program codes that output confidential information stored in the secure LSI 120 via the external input/output unit 125. This enhances the security of the confidential information. Further, as described later, the programs executed by the sub-processor 121 are not based on the publicly-released specifications but might be written in a programming language dedicated to the secure LSI 120. Herewith, the reliability of the processes carried out by the sub-processor 121 is enhanced, which in turn increases the security of the confidential information in the secure LSI 120.

A random number generation circuit 126 generates a random number according to an instruction from the sub-processor 121 and outputs the generated random number to the sub-processor 121. The random number is used, for example, for mutual authentication with the distribution center 31.

The secure input unit 130 outputs confidential information input from an input apparatus 42 external to the terminal 100 to the bus 127 in the secure LSI 120. The confidential information output from the secure input unit 130 is stored in the secure ROM 124 by the sub-processor 121. Note that the confidential information output from the secure input unit 130 may be stored directly in the secure ROM 124 without the involvement of the sub-processor 121.

The secure input unit 130 establishes an input path allowing information to be input into the secure LSI 120 without including the main processor 111 in the path. In addition, the secure input unit 130 is able to output information input thereto to the bus 127, but not able to output information input from the bus 127 to the outside of the secure LSI 120.

The process of inputting confidential information from the secure input unit 130 is allowed to take place at a point in time at least after the production of the secure LSI 120. For example, confidential information is allowed to be stored in the secure ROM 124 at any point in time from the time the produced secure LSI 120 is mounted on the terminal 100 to just before the terminal 100 equipped with the secure LSI 120 leaves a factory, or just before the terminal 100 is sold to a user.

Therefore, setting up the secure input unit 130 allows appropriate confidential information according to the style of selling the terminal 100 and the style of service provision using the terminal 100 to be stored in the secure LSI 120. As a result, the versatility of the terminal 100 is increased. For example, in the case where the terminal 100 has a mobile phone function, it is possible to store, in the secure ROM 124, unique confidential information generated by a mobile phone carrier or supplier. In this case, the mobile phone carrier or supplier is able to provide services using the generated unique confidential information, thus making it easier to offer their own unique services.

In addition, as a connecting part for the input apparatus 42 to connect to the secure input unit 130, for example, a predetermined external pin amongst many external pins provided for the system LSI 110 may be used. Alternatively, a dedicated connector for connecting to the secure input unit 130 may be provided as the connecting part.

When an external pin of the system LSI 110 is used as the connecting part to the secure input unit 130 and also when a dedicated connector is provided inside the chassis of the terminal 100, input processing from the input apparatus 42 to the secure input unit 130 is basically limited to take place at the production stage of the terminal 100. In the case where the dedicated connector is provided on the outer surface of the chassis of the terminal 100, confidential information may be input from the input apparatus 42 to the secure input unit 130, for example, also at vendors of the terminal 100.

Note however that the terminal 100 preferably have a structure preventing a person who has purchased the terminal 100 from easily making access to the connecting part to the secure input unit 130. One possible way to achieve this is, for example, to configure the input external pin or dedicated connector to be detachable after the input of the confidential information via the secure input unit 130 is completed. This prevents the confidential information in the secure LSI 120 from being tampered with.

In addition, the secure input unit 130 may have, for example, a function of authenticating the input apparatus 42 or a decrypting function. In this case, a trusted party such as the manufacture or vendors of the terminal 100 manages information for the authentication or for the decryption, thereby preventing purchasers of the terminal 100 from tampering the confidential information in the secure LSI 120.

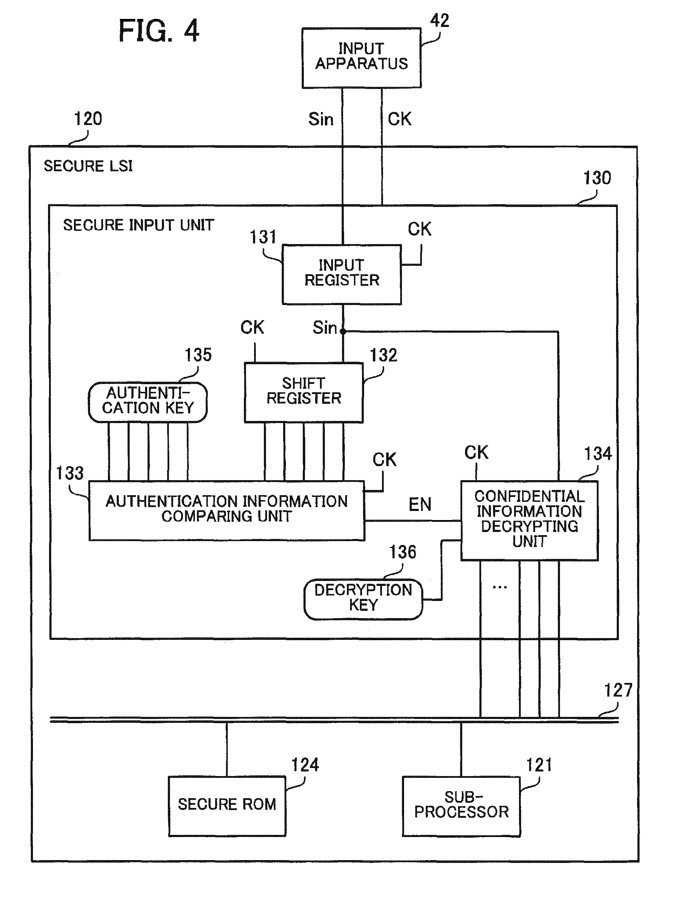

Next described is a configuration example of the secure input unit 130 with the authentication and decryption functions. FIG. 4 is a block diagram illustrating an example of hardware of a secure input unit.

The secure input unit 130 of FIG. 4 includes an input register 131, a shift register 132, an authentication information comparing unit 133, and a confidential information decrypting unit 134. In addition, the secure input unit 130 stores therein an authentication key 135 and a decryption key 136. Both the authentication key 135 and the decryption key 136 are fixed values, and are preliminarily stored in a non-volatile storage device (not illustrated) such as a read-only register. Note that the authentication key 135 is allowed to be read only from the authentication information comparing unit 133, and the decryption key 136 is allowed to be read only from the confidential information decrypting unit 134.

An input signal Sin and a clock signal CK are input from the input apparatus 42 to the secure input unit 130. The input signal Sin is input to the input register 131, The clock signal CK is input to each of the input register 131, the shift register 132, the authentication information comparing unit 133, and the confidential information decrypting unit 134. Note that the clock signal CK may be generated inside the terminal 100.

The input signal Sin is output to the shift register 132 and the confidential information decrypting unit 134 via the input register 131.

The shift register 132 shifts the value of the input signal Sin fed from the input register 131 on each clock to thereby hold a value of a predetermined number of bits. According to the example of FIG. 4, the shift register 132 holds a 5-bit value.

The authentication information comparing unit 133 is a circuit for an authentication process, and the confidential information decrypting unit 134 is a circuit for a decryption process. The authentication information comparing unit 133 outputs an enable signal EN to the confidential information decrypting unit 134. The enable signal EN indicates whether the input signal Sin is allowed to be input from the input register 131 to the confidential information decrypting unit 134. In the initial state, the value of the enable signal EN is "0" indicating that the input of the input information Sin into the confidential information decrypting unit 134 is prohibited.

The authentication information comparing unit 133 includes a comparator and a counter. The authentication information comparing unit 133 compares the value held by the shift register 132 and the value of the authentication key 135 for each bit to determine whether the values match. The bit number of the authentication key 135 is the same as that of the signal held by the shift register 132, and is "5" according to the example of FIG. 4.

When all the bits of the value held by the shift register 132 match those of the value of the authentication key 135, the authentication information comparing unit 133 changes the enable signal EN from "0" to "1", and also starts counting the clock signal CK. The initial value of the count number is "0", and the authentication information comparing unit 133 maintains the enable signal EN at "1" until the count number reaches a fixed value. Then, when the count number has reached the fixed value, the authentication information comparing unit 133 changes the enable signal EN from "1" to "0" and also resets the count number. In this manner, the input of the input signal Sin into the confidential information decrypting unit 134 is allowed only for a certain period of time.

The confidential information decrypting unit 134 is allowed to hold the value of the input signal Sin input from the input register 131 over the period of time when the enable signal EN is "1". The confidential information decrypting unit 134 holds the input signal Sin, for example, by using a shift register. The confidential information decrypting unit 134 decrypts the held signal using the decryption key 136 and outputs the decrypted signal to the sub-processor 121 via the bus 127.

The secure input unit 130 with the above-described configuration performs the following operations. The input signal Sin from the input apparatus 42 includes authentication information in the first five bits and encrypted confidential information in the subsequent predetermined number of bits. When determining that the authentication information included in the input signal Sin matches the authentication key 135, the authentication information comparing unit 133 changes the enable signal EN to "1" to thereby allow the input information Sin to be input to the confidential information decrypting unit 134. From this point in time, encrypted confidential information is input to and held by the confidential information decrypting unit 134.

The confidential information decrypting unit 134 decrypts the held information using the decryption key 136 and then outputs the decrypted confidential information to the sub-processor 121. The confidential information decrypted at this time includes, for example, a command instructing to store or update information and key information to be stored or updated. When being able to interpret the decrypted command correctly, the sub-processor 121 stores the decrypted key information in a predetermined area of the secure ROM 124.

According to the secure input unit 130 with the above-described configuration, signal input to the bus 127 inside the secure LSI 120 is allowed only for a certain period of time only after authentication information matching the authentication key 135 is input. Herewith, only a person who knows the confidential authentication key 135 is able to input information via the secure input unit 130. In addition, only after input information is correctly decrypted using the decryption key 136, the input information is stored in the secure ROM 124. This prevents a person knowing the authentication key 135 but not knowing key information to be used for encryption from storing information in the secure ROM 124. Thus, providing the double security function with the authentication key 135 and the decryption key 136 strengthens the security of information input via the secure input unit 130.

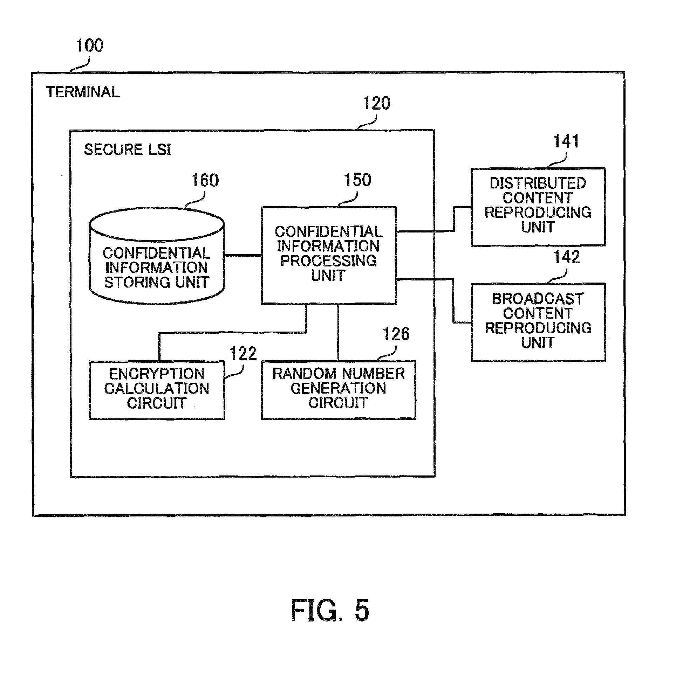

FIG. 5 is a block diagram illustrating a configuration example of functions provided for a terminal. The terminal 100 includes a distributed content reproducing unit 141, a broadcast content reproducing unit 142, a confidential information processing unit 150, and a confidential information storing unit 160.

Processing of the distributed content reproducing unit 141 is implemented by the main processor 111 executing a predetermined application program (for example, a distributed content reproducing program). The distributed content reproducing unit 141 controls a reproduction process for content distributed by the distribution center 31.

The distributed content reproducing unit 141 receives encrypted content from the distribution center 31. The received encrypted content is stored in the flash memory 102 or the RAM 101. The distributed content reproducing unit 141 requests the confidential information processing unit 150 to acquire a content key used to decrypt the encrypted content and, from that time onward, mediates data transfer between the confidential information processing unit 150 and the distribution center 31. Subsequently after the confidential information processing unit 150 receives an encrypted content key from the distribution center 31 and causes the encryption calculation circuit 122 to decrypt the received encrypted content key, the distributed content reproducing unit 141 receives the decrypted content key from the confidential information processing unit 150. The distributed content reproducing unit 141 decrypts the encrypted content using the content key received from the confidential information processing unit 150, and supplies the decrypted distributed content to the decompression circuit 112 to thereby cause the decompression circuit 112 to reproduce and output the distributed content.

Processing of the broadcast content reproducing unit 142 is implemented by the main processor 111 executing a predetermined application program (for example, a broadcast content reproducing program). The broadcast content reproducing unit 142 controls a reproduction process for broadcast content received from the broadcast station 32 via airwaves.

The broadcast content reproducing unit 142 requests the confidential information processing unit 150 to decrypt an encrypted work key and an encrypted content key received via airwaves. The encrypted work key is a work key encrypted by a master key stored in the secure LSI 120, and the encrypted content key is a content key used to decrypt broadcast content encrypted by the work key. Both the work key and the content key are periodically updated.

The broadcast content reproducing unit 142 receives the decrypted content key from the confidential information processing unit 150, and decrypts encrypted content received via airwaves using the received content key. The broadcast content reproducing unit 142 supplies the decrypted broadcast content to the decompression circuit 112 to thereby cause the decompression circuit 112 to reproduce and output the broadcast content.

Processing of the confidential information processing unit 150 is implemented by the sub-processor 121 executing an exclusive-use program dedicated to the secure LSI 120. In response to a request from the distributed content reproducing unit 141 or the broadcast content reproducing unit 142, the confidential information processing unit 150 acquires key information used to reproduce content or controls decryption of the key information. During these processes, the confidential information processing unit 150 causes the encryption calculation circuit 122 to encrypt and decrypt information, and causes the random number generation circuit 126 to generate a random number.

The confidential information storing unit 160 is composed of a storing area of the secure ROM 124. The confidential information storing unit 160 stores therein at least a secret key and a master key of the terminal 100 as confidential information needed to be kept secret. The secret key is used to reproduce distributed content, and the master key is used to reproduce broadcast content. The secret key and the master key are input from the secure input unit 130 and then stored in the confidential information storing unit 160. Note that the secret key and the master key may be common key information.

In addition, the confidential information storing unit 160 also stores therein identification information of the terminal 100 and a public key of the distribution center 31. The identification information and public key may be input from the secure input unit 130; however, they do not necessarily need to be kept secret and therefore may be input from the external input/output unit 125.

Next described is a process of reproducing content distributed by the distribution center 31.

The terminal 100 has identification information, such as an identification number. The identification information is preliminarily stored in the secure ROM 124 of the secure LSI 120. Note however that the identification information does not necessarily need to be kept secret. The identification information may be, for example, a user identification for identifying a user.

Mutual authentication and encryption processing using secret/public key cryptography are carried out between the sup-processor 121 of the secure LSI 120 and the distribution center 31. The secure ROM 124 of the secure LSI 120 stores therein a secret key of the terminal 100 and a public key of the distribution center 31. The secret key of the terminal 100 needs to be kept secret and is not available to be accessed from the main processor 111. On the other hand, the public key of the distribution center 31 does not need to be kept secret, and may be, for example, received from the outside of the terminal 100 and then stored in the secure LSI 120 by the external input/output unit 125.

The distribution center 31 manages a private key of the distribution center 31 and a public key of the terminal 100. The public key is provided for each terminal, and the distribution center 31 is able to determine the public key corresponding to a terminal by receiving identification information from the terminal.

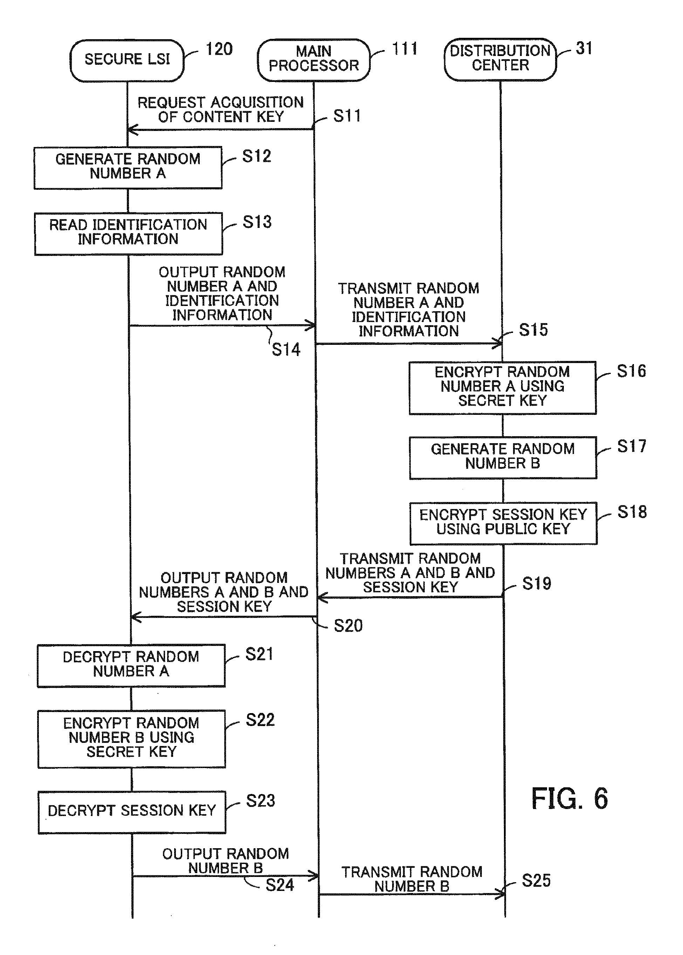

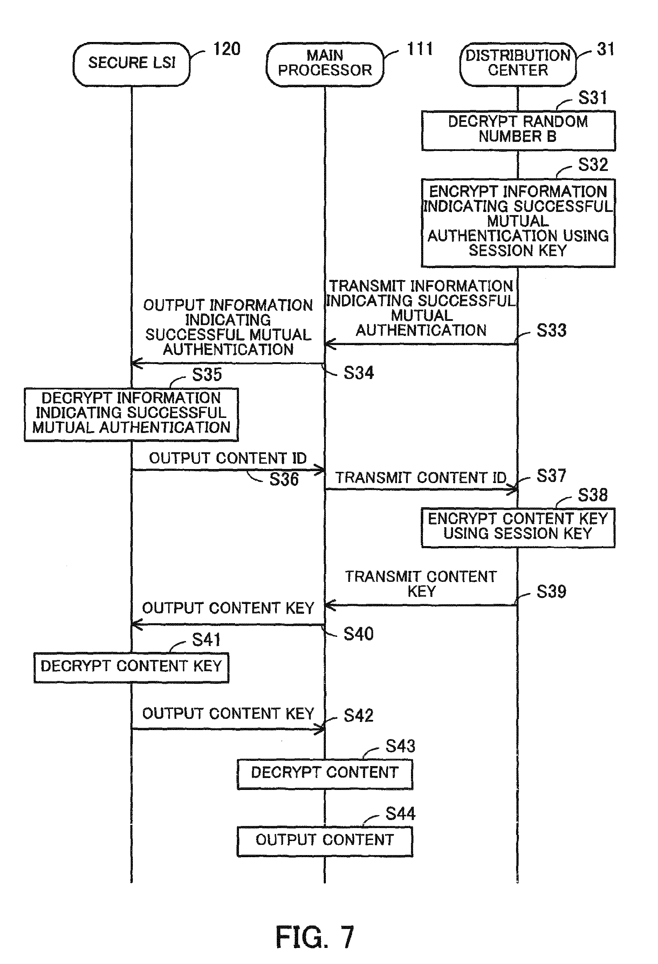

FIGS. 6 and 7 illustrate an example of a sequence of a distributed content reproduction process. In FIGS. 6 and 7, processes of the main processor 111 correspond to those of the distributed content reproducing unit 141 of FIG. 5, and processes of the sub-processor 121 amongst processes of the secure LSI 120 correspond to those of the confidential information processing unit 150 of FIG. 5.

Assume that a distributed content reproduction process is requested, for example, by an input operation of a user. Note that the distributed content is stored, for example, in the flash memory 102, while being encrypted using a content key.

In response to the operation requesting the reproduction process, the main processor 111 requests the sub-processor 121 of the secure LSI 120 to acquire the content key (step S11). In this regard, the main processor 111 notifies the sub-processor 121 of content identification for identifying content to be reproduced.

After requesting the acquisition of the content key, the main processor 111 repeats the process of transferring information output from the sub-processor 121 to the distribution center 31 and supplying information received from the distribution center 31 to the sub-processor 121 during the period from the output of the content key from the sub-processor 121 to reception of notification of the end of the process.

The sub-processor 121 causes the random number generation circuit 126 to generate a random number A (step S12). The sub-processor 121 reads the identification information of the terminal 100 from the secure ROM 124 (step S13). Note that the processing order of steps S12 and S13 may be reversed. The sub-processor 121 outputs the generated random number A and the read identification information to the main processor 111 (step S14). The main processor 111 transmits the input random number A and identification information to the distribution center 31. The distribution center 31 receives the random number A and the identification information of the terminal 100 (step S15).

The distribution center 31 encrypts the received random number A using the secret key of the distribution center 31 (step S16). The distribution center 31 generates a random number B (step S17). The distribution center 31 searches for the public key of the terminal 100 based on the received identification information. Then, the distribution center 31 randomly generates a session key. The session key is key information used as a common key shared with the terminal 100. The distribution center 31 encrypts the generated session key using the public key of the terminal 100 found in the search (step S18). Note that the processing order of steps S16 to S18 may be changed.

The distribution center 31 transmits, to the terminal 100, information including the encrypted random number A, the generated random number B, and the encrypted session key. The main processor 111 receives information transmitted by the distribution center 31 (step S19). The main processor 111 outputs the received information to the secure LSI 120 (step S20).

The sub-processor 121 causes the encryption calculation circuit 122 to decrypt the input encrypted random number A using the public key of the distribution center 31. When the random number A is decrypted, the sub-processor 121 determines that the authentication with the distribution center 31 is successful (step S21). The sub-processor 121 causes the encryption calculation circuit 122 to encrypt the input random number B using the secret key of the terminal 100 (step S22). The sub-processor 121 causes the encryption calculation circuit 122 to decrypt the input session key using the secret key of the terminal 100 (step S23). The sub-processor 121 outputs the encrypted random number B to the main processor 111 (step S24), which is then transmits the input random number B to the distribution center 31. The distribution center 31 receives the random number B (step S25).

The distribution center 31 decrypts the received random number B using the public key of the terminal 100. When the random number B is decrypted, the distribution center 31 determines that the authentication with the terminal 100 is successful (step S31). Then, the distribution center 31 encrypts notification information for giving notice of the successful mutual authentication using the session key (step S32). The distribution center 31 transmits the encrypted notification information to the terminal 100. The main processor 111 receives the encrypted notification information (step S33). The main processor 111 outputs the encrypted notification information to the secure LSI 120 (step S34).

The sub-processor 121 causes the encryption calculation circuit 122 to decrypt the input notification information using the session key decrypted in step S23, and determines that the mutual authentication with the distribution center 31 is successful (step S35). Note that the decryption of the session key (step S23) may be carried out at any point in time from the execution of step S21 to just before the execution of step S35.

The sub-processor 121 outputs content identification to the main processor 111 (step S36), which then transmits the input content identification to the distribution center 31 (step S37). Note that the transmission of the content identification from the sub-processor 121 to the distribution center 31 may take place, for example, in steps S14 and S15.

The distribution center 31 receives the content identification and searches for a content key corresponding to the received content identification. The distribution center 31 encrypts the content key found in the search using the session key (step S38). The distribution center 31 transmits the encrypted content key to the terminal 100. The main processor 111 receives the encrypted content key (step S39). The main processor 111 outputs the encrypted content key to the secure LSI 120 (step S40).

The sub-processor 121 causes the encryption calculation circuit 122 to decrypt the input content key using the session key decrypted in step S23 (step S41). The sub-processor 121 outputs the decrypted content key to the main processor 111 and gives notice of the end of the content key acquisition process (step S42).

The main processor 111 decrypts the encrypted content using the content key (step S43). The main processor 111 outputs the decrypted content to the decompression circuit 112 to have the content reproduced and output (step S44).

As described above, to perform mutual authentication with the distribution center 31, the terminal 100 uses the secret key stored in a storage area of the secure LSI 120. In addition, the terminal 100 carries out decryption of encrypted data to be used for the mutual authentication inside the secure LSI 120. Then, the terminal 100 carries out decryption of the content key using the session key obtained by the mutual authentication inside the secure LSI 120. In this manner, the secret key and the session key are protected from being snooped or tampered with from outside, thus ensuring the security at the time of acquiring the content key.

Next described is a process of reproducing broadcast content distributed by the broadcast station 32. Broadcast content is transmitted from the broadcast station 32 via airwaves while being encrypted using a content key. In addition, the content key is transmitted with the encrypted broadcast content via airwaves while being encrypted using a work key. The content key is updated periodically, for example, every few seconds.

In addition, the work key is transmitted via airwaves while being encrypted using a master key dedicated to each user. The update cycle of the work key is longer than that of the content key. For example, in the case where a broadcast content viewing service is signed up for on a monthly basis, the work key is updated once a month when the contract is renewed.

According to the second embodiment, the master key is stored in the secure ROM 124 of the secure LSI 120. The master key is information needed to be kept secret and is not available to be accessed from the main processor 111.

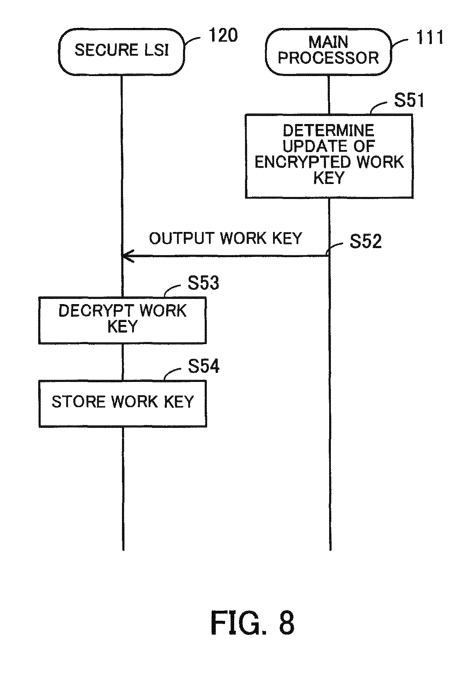

FIG. 8 illustrates an example of a sequence of a work key acquisition process. In FIG. 8, an encrypted work key transmitted from the broadcast station 32 has an update number attached thereto. The update number is updated by the broadcast station 32 together with the encrypted work key. In addition, the broadcast station 32 manages the identification information of the terminal 100 and the master key in association with each other. The identification information of the terminal 100 is information corresponding to the user identification described above. Assume that the master key is a common key.

Note that the master key may be a secret key of the terminal 100. In this case, the broadcast station 32 manages a public key corresponding to the master key of the terminal 100 in association with the identification information of the terminal 100.

The main processor 111 determines that the encrypted work key has been updated. The work key is updated, for example, once a month. The flash memory 102 of the terminal 100 stores therein the latest update number amongst updated numbers previously received, and the main processor 111 determines whether an update has occurred by comparing the update number attached to the encrypted work key and the update number stored in the flash memory 102 (step S51). When the encrypted work key has been updated by the broadcast station 32, the main processor 111 outputs the updated encrypted work key to the secure LSI 120 (step S52). In addition, the main processor 111 overwrites the update number stored in the flash memory 102 with the received update number.

The sub-processor 121 causes the encryption calculation circuit 122 to decrypt the input encrypted work key using the master key (step S53). The sub-processor 121 stores the decrypted work key in a storage medium provided in the secure LSI 120, such as the secure ROM 124 (step S54).

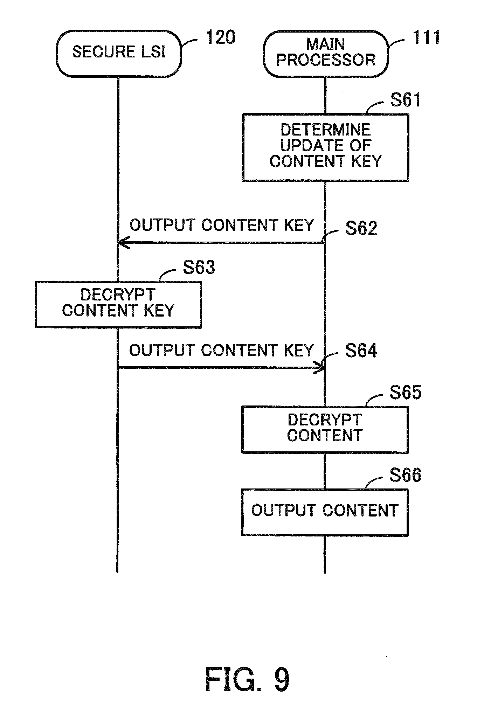

FIG. 9 illustrates an example of a sequence of a broadcast content reproduction process. In FIG. 9, an encrypted content key transmitted from the broadcast station 32 has an update number attached thereto. The update number is updated by the broadcast station 32 together with the encrypted content key.

The main processor 111 periodically checks whether the encrypted content key has been updated. The content key is updated, for example, every few seconds, and is also updated in the following manner every time content update information is received. The flash memory 102 of the terminal 100 stores therein the latest update number amongst updated numbers previously received, and the main processor 111 determines whether an update has occurred by comparing the update number attached to an encrypted content key included in the content update information and the update number stored in the flash memory 102 (step S61). When the encrypted content key has been updated, the main processor 111 outputs the updated encrypted content key to the secure LSI 120 (step S62). In addition, the main processor 111 overwrites the update number stored in the flash memory 102 with the received update number.

The sub-processor 121 causes the encryption calculation circuit 122 to decrypt the encrypted content key using the work key stored in step S54 (step S63). The sub-processor 121 outputs the decrypted content key to the main processor 111 (step S64).

The main processor 111 decrypts encrypted broadcast content supplied from the TV reception unit 106 using the input content key (step S65). The main processor 111 outputs the decrypted broadcast content to the decompression circuit 112, as in step S42 (step S66).

As illustrated in FIGS. 8 and 9, the terminal 100 decrypts, in the secure LSI 120, the encrypted work key using the master key stored in a storage device residing in the secure LSI 120. In addition, the terminal 100 decrypts, in the secure LSI 120, the encrypted content key using the decrypted work key. In this manner, the master key and the work key are protected from being tampered with or snooping from outside, thus ensuring the security at the time of acquiring the content key.

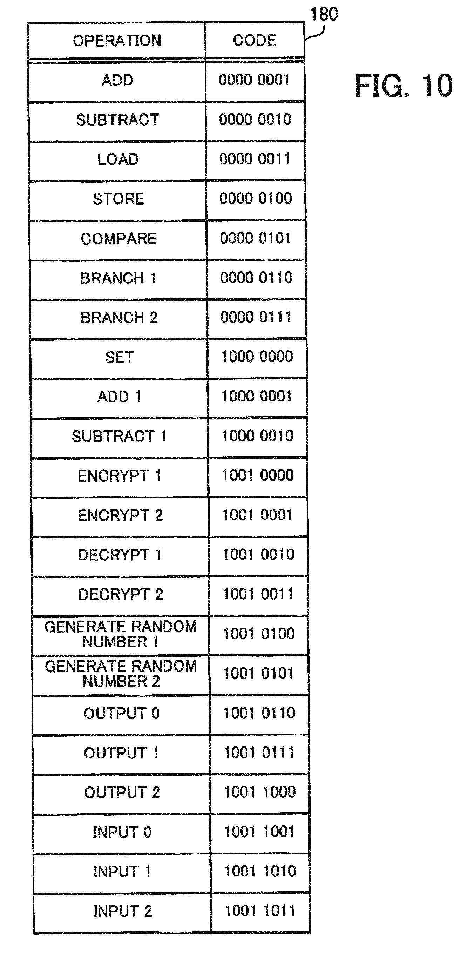

Next described is a program executed by the sub-processor 121 of the secure LSI 120. In the secure LSI 120, an exclusive-use program whose specifications are not released to the public is executed, unlike in the main processor 111. This reduces the risk of the sub-processor 121 of the secure LSI 120 being hacked, thereby improving the security of processes in the secure LSI 120. For example, even if codes of a program executed on the sub-processor 121 are leaked, the analysis of the program is not easy and, therefore, the risk of the sub-processor 121 being hacked is reduced. The exclusive-use program is written, for example, using exclusive-use operation codes illustrated in FIG. 10.

In addition, according to the second embodiment, when the exclusive-use program is executed on the secure LSI 120, exclusive-use operation codes are converted to operation codes corresponding to the sub-processor 121 using a conversion program. Specifically, first, the exclusive-use program and the conversion program are stored in the secure ROM 124. In this situation, when the exclusive-use program is executed, exclusive-use operation codes constituting the exclusive-use program to be executed are converted to operation codes (for example, machine codes) corresponding to the sub-processor 121 using the conversion program. Then, the converted operation codes are executed by the sub-processor 121. Using such a conversion program allows the use of an exclusive-use program independent of the type of the sub-processor 121, which facilitates the development of exclusive-use programs.

FIG. 10 illustrates an example of a list of exclusive-use operation codes. An operation code list 180 is a list of exclusive-use operation codes to be used in the secure LSI 120. The operation code list 180 is stored in the secure ROM 124 of the secure LSI 120. Then, when the conversion program is executed, the operation code list 180 being decrypted is loaded into the secure RAM 123.

The operation code list 180 includes columns named operation and code. In the operation column, each field contains an operation executable by the sub-processor 121. In the code column, each field contains an exclusive-use operation code of the corresponding operation, in binary digits. Note that, when an operation is actually issued, a register and an address are designated for the corresponding code. In the following description, the number of a designated register is denoted as "x" and a designated address is denoted as "a".

According to the second embodiment, operations of the exclusive-use operation codes include the following: add; subtract; load; store; compare; branch 1; branch 2; set; add 1; subtract 1; encrypt 1; encrypt 2; decrypt 1; decrypt 2; generate random number 1; generate random number 2; output 0; output 1; output 2; input 0; input 1; and input 2.

For example, the operation "add" is to add the content of the designated register x and the content of the designated address a and store the addition result in the register x. The operation code corresponding to "add" is 00000001.

The operation "subtract" is to subtract the content of the designated address a from the content of the designated register x and store the subtraction result in the register x. The operation code corresponding to "subtract" is 00000010.

The operation "load" is to store the content of the designated address a in the designated register x. The operation code corresponding to "load" is 00000011.

The operation "store" is to store the content of the designated register x in the designated address a. The operation code corresponding to "store" is 00000100.

The operation "compare" is to compare the content of the designated register x and the content of the designated address a, and store the comparison result in a predetermined register, such as a status register. For example, when the content of the designated register x matches the content of the designated address a, information indicating "match" is stored in the predetermined register. The operation code corresponding to "compare" is 00000101.

The operation "branch 1" is to redirect the operation to the designated address a if the comparison result stored in the predetermined register in the "compare" operation is the information indicating "match". The operation code corresponding to "branch 1" is 00000110.

The operation "branch 2" is to unconditionally redirect the operation to the designated address a. The operation code corresponding to "branch 2" is 00000111.

The operation "set" is to store designated data d in the designated register x. The operation code corresponding to "set" is 10000000.

The operation "add 1" is to add the designated data d to the content of the designated register x, and store the addition result in the designated register x. The operation code corresponding to "add 1" is 10000001.

The operation "subtract 1" is to subtract the designated data d from the content of the designated register x, and store the subtraction result in the designated register x. The operation code corresponding to "subtract 1" is 10000010.

The operation "encrypt 1" is to initialize an encryption processing circuit in the encryption calculation circuit 122. The initialization of the encryption processing circuit includes, for example, an operation of setting an encryption method (for example, the Advanced Encryption Standard (AES) or the Data Encryption Standard (DES)) and keys. The operation code corresponding to "encrypt 1" is 10010000.

The operation "encrypt 2" is to encrypt the content of the designated register x and store the encrypted content in the designated address a. The operation code corresponding to "encrypt 2" is 10010001.

The operation "decrypt 1" is to initialize a decryption processing circuit in the encryption calculation circuit 122. The operation code corresponding to "decrypt 1" is 10010010.

The operation "decrypt 2" is to decrypt the content of the designated register x and store the decrypted content in the designated address a. The operation code corresponding to "decrypt 2" is 10010011.

The operation "generate random number 1" is to initialize the random number generation circuit 126. The initialization of the random number generation circuit 126 includes, for example, an operation of setting an initial value to be used to generate a random number. The operation code corresponding to "generate random number 1" is 10010100.

The operation "generate random number 2" is to generate a random number, set the generated random number in the designated register x, and store the set content of the register x in the designated address a. The operation code corresponding to "generate random number 2" is 10010101.

The operation "output 0" to initialize an output circuit in the external input/output unit 125. The initialization of the output circuit includes, for example, an operation of making a setting to activate the output circuit of the external input/output unit 125. The operation code corresponding to "output 0" is 10010110.

The operation "output 1" is to sequentially output numerical data of the content of the designated register x to the output circuit from the designated address a. For example, when the operation "output 1" is executed while designating "2" as the content of the register x, the content of the address a and the content of an address a+1 are sequentially output to the output circuit. The operation code corresponding to "output 1" is 10010111.

The operation "output 2" is to store, in the designated register x, information indicating whether the data output by the operation "output 1" has been read to the main processor 111. The operation code corresponding to "output 2" is 10011000.

The operation "input 0" is to initialize an input circuit in the external input/output unit 125. The operation code corresponding to "input 0" is 10011001.'

The operation "input 1" is to sequentially input numerical data indicated by the content of the designated register x to the input circuit from the designated address a. The operation code corresponding to "input 1" is 10011010.

The operation "input 2" is to store, in the designated register x, information indicating whether data input by the operation "input 1" has been read into the sub-processor 121. The operation code corresponding to "input 2" is 10011011.

When the exclusive-use program is executed on the secure LSI 120, first, the exclusive-use operation codes constituting the exclusive-use program are converted to operation codes corresponding to the sub-processor 121 by a conversion program referring to the operation code list 180. Then, the sub-processor 121 executes the converted operation codes.

As described above, the sub-processor 121 of the secure LSI 120 executing the exclusive-use program improves the security of processes and stored information in the secure LSI 120.

Note however that when the operation code list 180 above is leaked, the content of the exclusive-use program becomes analyzable, possibly causing a security problem. In view of this, the terminal 100 may be configured to allow the exclusive-use program to be replaced, as described below. When the operation code list 180 is leaked, the content of the operation code list 180 and the content of the exclusive-use program are replaced with different content in the secure LSI 120, thereby ensuring the security.

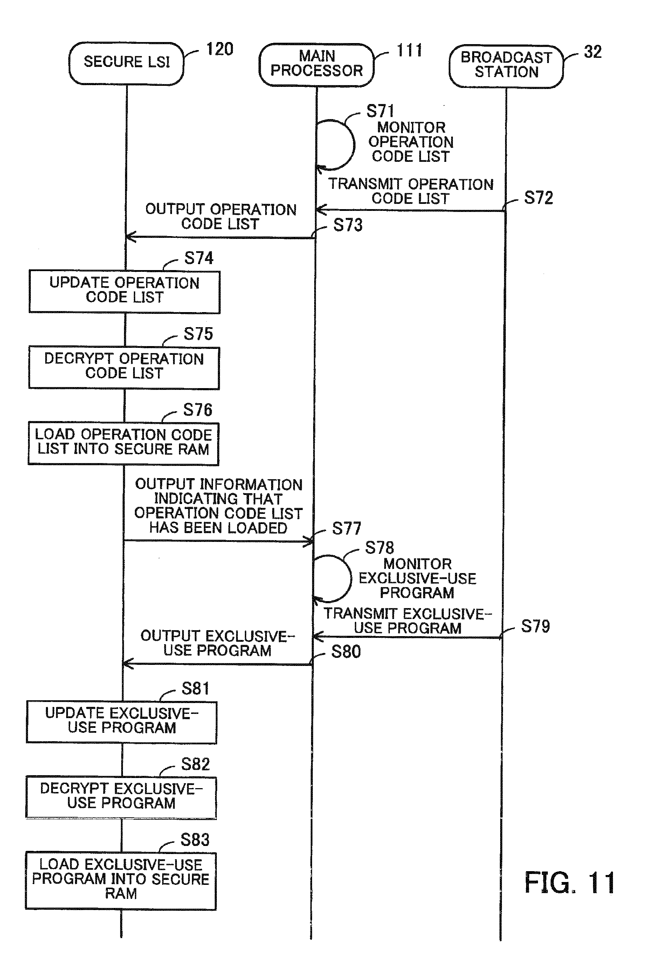

FIG. 11 illustrates an example of a sequence of an operation code list replacement process. FIG. 11 represents a sequence example where the terminal 100 updates the operation code list 180 and the exclusive-use program when the operation code list 180 has been leaked.

Assume that the operation code list and the operation program are stored in the secure ROM 124 while being encrypted, and then decrypted using a predetermined key and loaded into the secure RAM 123 when being executed.

Processing of the sub-processor 121 described in FIG. 11 is, for example, implemented by the sub-processor 121 executing a predetermined program replacement program. Programs to be replaced according to the replacement program include the replacement program itself. In addition, processing of the main processor 111 in FIG. 11 is executed according to a program for requesting the sub-processor 121 for program replacement.

First, the main processor 111 monitors an updated operation code list transmitted from the broadcast station 32 (step S71). When the broadcast station 32 transmits the updated encrypted operation code list (hereinafter referred to as the "encrypted operation code list") to the terminal 100, the main processor 111 receives the encrypted operation code list (step S72). The main processor 111 outputs the received encrypted operation code list to the secure LSI 120 (step S73).

The sub-processor 121 updates the encrypted operation code list stored in the secure ROM 124 with the input encrypted operation code list (step S74). The sub-processor 121 causes the encryption calculation circuit 122 to decrypt the updated encrypted operation code list. A key used for the decryption is preliminarily routed through the secure input unit 130 and then stored in the secure ROM 124 (step S75). The sub-processor 121 loads the decrypted updated operation code list into the secure RAM 123 (step S76). The sub-processor 121 outputs, to the main processor 111, information indicating that the updated operation code list has been loaded (step S77).

Next, the main processor 111 monitors an updated exclusive-use program transmitted from the broadcast station 32. The updated exclusive-use program is made up of exclusive-use operation codes included in the update operation code list (step S78). The broadcast station 32 transmits the encrypted updated exclusive-use program (hereinafter, the "encrypted exclusive-use program") to the terminal 100, and the main processor 111 receives the encrypted exclusive-use program (step S79). The main processor 111 outputs the received encrypted exclusive-use program to the secure LSI 120 (step S80).

The sub-processor 121 updates the encrypted exclusive-use program stored in the secure ROM 124 with the input updated encrypted exclusive-use program (step S81). The sub-processor 121 causes the encryption calculation circuit 122 to decrypt the updated encrypted exclusive-use program. A key used for the decryption is preliminarily routed through the secure input unit 130 and then stored in the secure ROM 124 (step S82). The sub-processor 121 loads the decrypted updated exclusive-use program into the secure RAM 123 (step S83).

Thus, even when the content of the operation code list 180 is leaked, the content of the exclusive-use program is protected from being snooped or tampered with by replacing the operation code list and the exclusive-use program.

According to the second embodiment above, confidential information, such as a master key, is stored via the secure input unit 130 allowed to access the secure LSI 120. In this manner, to store the confidential information in the secure ROM 124, the confidential information is not routed through the system LSI 110 or the like possibly accessed from the outside, thus reducing the chance of being snooped by a third party. As a result, the terminal 100 is able to store the confidential information in the secure RAM 123 more safely.

In addition, the process of inputting confidential information via the secure input unit 130 is allowed to take place at a point in time at least after the production of the secure LSI 120. Herewith, it is possible to store, in the secure ROM 124, appropriate confidential information tailored to the type of services to be provided for the marketed terminal 100, thus improving the versatility of the terminal 100.

The secure LSI 120 acquires encrypted data, such as an encrypted content key, via the external input/output unit 125 configured to input and output data to and from the system LSI 110. Then, the secure LSI 120 decrypts the acquired encrypted data using a secret key or the like stored in the secure ROM 124, and outputs the decrypted data to the system LSI 110. In this manner, the terminal 100 is able to decrypt the encrypted data inside the secure LSI 120 where confidential information such as a secret key is not revealed to the outside, thus realizing safer decryption of encrypted data.

In order to acquire a content key from the distribution center 31, the terminal 100 generates a random number in the secure LSI 120. Next, the terminal 100 performs mutual authentication with the distribution center 31 using the generated random number, identification information and a secret key preliminarily stored in the secure ROM 124. When the mutual authentication is successful, the terminal 100 is able to acquire the content key from the distribution center 31. Herewith, the terminal 100 is able to perform mutual authentication with the distribution center 31 without the confidential information being tampered with or snooped.

The terminal 100 uses an exclusive-use program to run only on the secure LSI 120. This makes it difficult to analyze the exclusive-use program by snooping corresponding exclusive-use operation codes.

In the secure LSI 120, the terminal 100 converts exclusive-use operation codes constituting the exclusive-use program into operation codes corresponding to the sub-processor 121 using a conversion program and the operation code list 180. Then, the sub-processor 121 executes the converted operation codes. In this manner, the exclusive-use program is executable on the secure LSI 120, independent of operation codes corresponding to the sub-processor 121 on the secure input unit 130.

The operation code list 180 and the conversion program stored in the secure ROM 124 are replaceable. With this, it is possible to prevent the content of the exclusive-use program from being analyzed even if the content of the operation code list 180 is leaked for any reason.

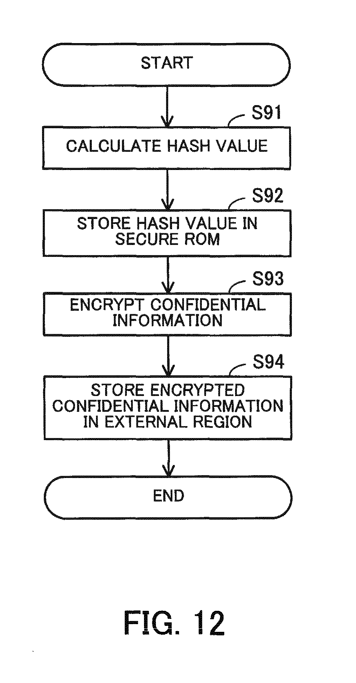

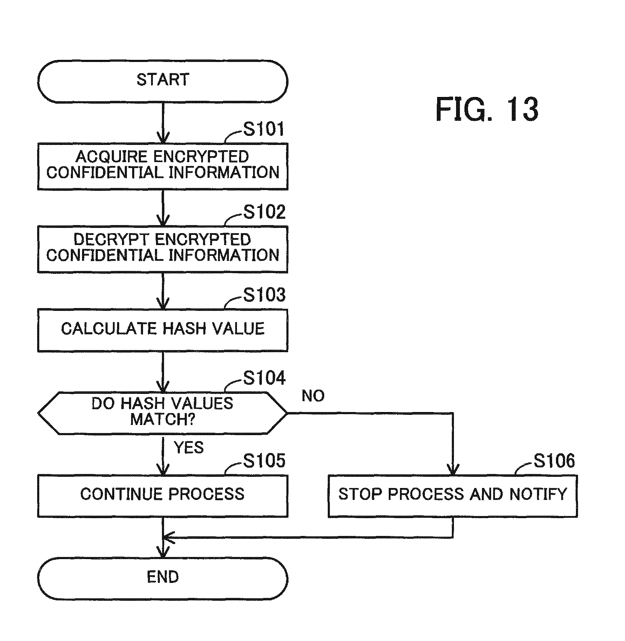

Note that the terminal 100 is sometimes not able to save much confidential information in the secure LSI 120 because the secure ROM 124 is small in capacity. In this case, the terminal 100 may save encrypted confidential information in a storage device external to the secure LSI 120 (for example, the flash memory 102). FIGS. 12 and 13 represent a method of inputting and outputting confidential information to and from the RAM 101 and the flash memory 102 external to the secure LSI 120. Here, a process of saving confidential information is described taking the case of reproducing broadcast content as an example. Assume here that the master key is a common key and stored in the secure ROM 124.

Note that, in FIGS. 12 and 13, processes of the sub-processor 121 correspond to those of the confidential information processing unit 150 of FIG. 5, and processes of the main processor 111 correspond to those of the broadcast content reproducing unit 142 of FIG. 5.

FIG. 12 is a flowchart illustrating an example of a process of externally saving confidential information. The external saving process may be applied, for example, to a process of re-encrypting the work key decrypted in step S53 of FIG. 8 and saving the work key externally to the secure LSI 120 and also a process of re-encrypting the content key decrypted in step S63 of FIG. 9 and saving the content key externally to the secure LSI 120.

(Step S91) The sub-processor 121 calculates a hash value of the confidential information.

(Step S92) The sub-processor 121 stores the calculated hash value in the secure ROM 124.

(Step S93) The sub-processor 121 causes the encryption calculation circuit 122 to encrypt the confidential information using the master key or the like stored in the secure ROM 124. Hereinafter, confidential information being encrypted is referred to as the "encrypted confidential information".

(Step S94) The sub-processor 121 requests the main processor 111 to store the encrypted confidential information in a storage device external to the secure LSI 120 (for example, RAM 101 or the flash memory 102).

FIG. 13 is a flowchart illustrating an example of a process of reading confidential information. FIG. 13 represents a case of carrying out a predetermined process using the confidential information stored in the storage area external to the secure LSI 120 according to the process of FIG. 12.

(Step S101) The sub-processor 121 requests the main processor 111 to output, to the secure LSI 120, the encrypted confidential information from the storage area external to the secure LSI 120. In response to the request, the main processor 111 outputs, to the sub-processor 121, the encrypted confidential information stored in the external storage area by the process of FIG. 12.

(Step S102) The sub-processor 121 causes the encryption calculation circuit 122 to decrypt the acquired encrypted confidential information using the master key.

(Step S103) The sub-processor 121 calculates a hash value of the decrypted confidential information.

(Step S104) The sub-processor 121 determines whether the calculated hash value matches the hash value stored in step S92. If the hash values match each other, the process proceeds to step S105. If the hash values do not match, the process proceeds to step S106.

(Step S105) The sub-processor 121 executes the predetermined process using the confidential information.

(Step S106) The sub-processor 121 cancels the process and outputs, to the main processor 11, notification information for giving notice of, for example, the confidential information having been tampered with.

As illustrated in FIGS. 12 and 13, in order to store confidential information in a storage device external to the secure LSI 120, the terminal 100 stores a hash value of the confidential information in the secure ROM 124 or the like. Next, to use the confidential information stored in the external storage device, the terminal 100 calculates, in the secure LSI 120, a hash value of the confidential information stored in the external storage area. Then, if the calculated hash value matches the hash value stored in the secure ROM 124, the terminal 100 determines that the confidential information has not been tampered with. In this manner, it is possible to see whether the confidential information stored in the storage device external to the secure LSI 120 has been tampered with.

Next described is a modification for improving the security when the main processor 111 decrypts distributed content or broadcast content using a content key.

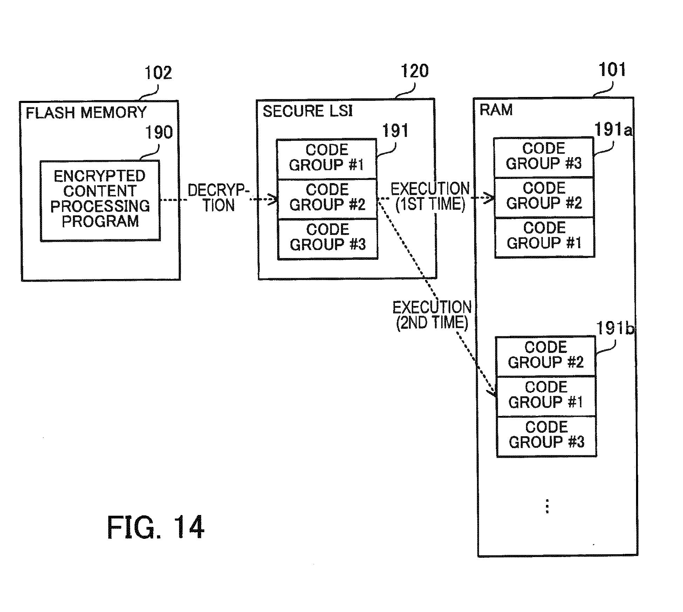

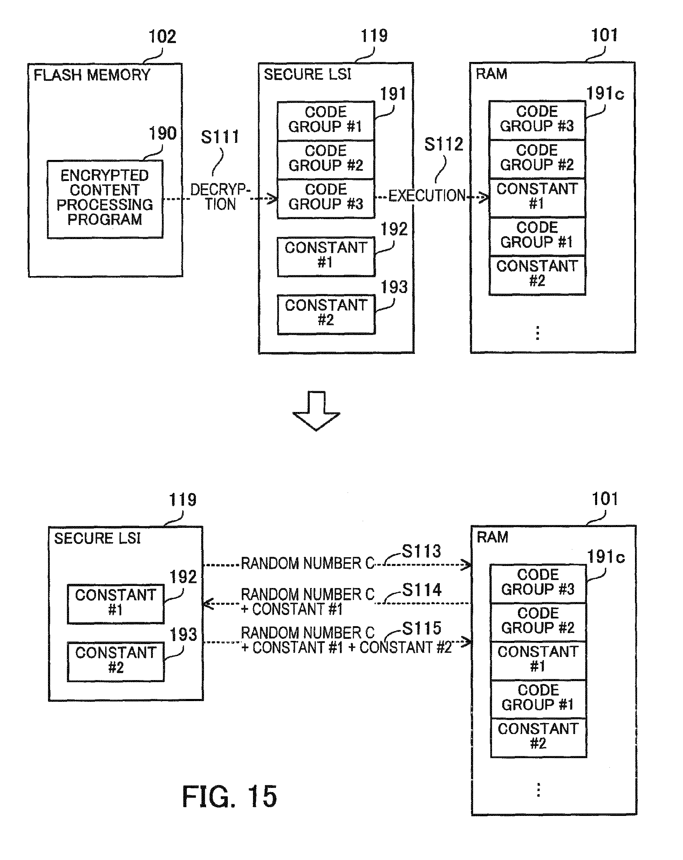

When the terminal 100 according to the second embodiment outputs content after acquisition of the content key by the above-described method, a content processing program (for example, a distributed or a broadcast content reproducing program) for processing content may be snooped or tampered with. In such a case, the content key may be leaked, which allows a large indefinite number of people to be able to reproduce encrypted content. With reference to FIGS. 14 and 15, examples of methods for preventing the content processing program from being snooped and tampered with are described next.

FIG. 14 illustrates an example of restructuring program codes. As illustrated in FIG. 14, an encrypted content processing program 190 is stored in the flash memory 102. The encrypted content processing program 190 is formed by encrypting a content processing program 191 to be used by the main processor 111 to process content. Assume here that the encrypted content processing program 190 is decrypted using a decryption key, such as the master key, stored in the secure ROM 124.

First, the sub-processor 121 reads the encrypted content processing program 190 from the flash memory 102 via the main processor 111, and causes the encryption calculation circuit 122 to decrypt the read encrypted content processing program 190 using the decryption key. The decrypted content processing program 191 includes code groups #1, #2, and #3 each of which is an operation code group. The code groups are arranged in order of #1, #2, and #3.

Next, each time the sub-processor 121 starts the decrypted content processing program 191, it rearranges the order of the code groups #1, #2, and #3 of the content processing program 191 and then loads the content processing program 191 into the RAM 101 via the main processor 111. Subsequently, the sub-processor 121 causes the main processor 111 to execute the loaded content processing program 191. For example, in the first execution of the content processing program 191, a content processing program 191a with the code groups arranged in order of #3, #2, and #1 is loaded into the RAM 101. In the second execution, a content processing program 191b with the code groups arranged in order of #2, #1, and #3 is loaded into the RAM 101. The order of the code groups arranged in the RAM 101 being different makes it difficult for hackers to analyze codes, thus making hacking difficult. Note that, although the arrangement of the code groups is different each time, the functions of the code groups remain the same when seen from the outside.

As described above, each time the main processor 111 executes the content processing program 191, the sub-processor 121 rearranges the order of the code groups #1, #2, and #3 of the content processing program 191 and then loads the content processing program 191 into the RAM 101. Herewith, since the arrangement order of the operation codes is changed each time the content processing program 191 is executed, it is difficult for a third party to analyze the content processing program by snooping.

FIG. 15 illustrates an example of mutual authentication with a program. As illustrated in the upper part of FIG. 15, the encrypted content processing program 190 is decrypted by the secure LSI 120 to be the content processing program 191 including the operation code groups #1, #2, and #3 (step S111), as in the case of FIG. 14.

In this situation, the sub-processor 121 rearranges the order of the code groups #1, #2, and #3 and constants #1 and #2. For instance, a content processing program 191c with the rearranged order of the code groups #3 and #2, the constant #1, the code group #1, and the constant #2 is generated. Each of the constants #1 and #2 is randomly generated by the random number generation circuit 126 of the secure LSI 120, and used for the mutual authentication between the sub-processor 121 and the content processing program 191c. The constants #1 and #2 are stored also in a storage area of the secure LSI 120 (for example, the secure RAM 123 or the secure ROM 124). Then, the sub-processor 121 causes the main processor 111 to load the rearranged content processing program 191c into the RAM 101 (step S112).

Next, as illustrated in the lower part of FIG. 15, after the content processing program 191c is executed by the main processor 111, the sub-processor 121 generates a random number C and outputs the generated random number C to the main processor 111 (step S113). The main processor 111 outputs, to the sub-processor 121, the sum of the received random number C and the constant #1 included in the content processing program 191c (step S114).

If the sum of the random number C output from the sub-processor 121 and the constant #1 stored in the secure LSI 120 matches the value input from the main processor 111, the sub-processor 121 determines that the authentication of the content processing program 191c is successful. When the authentication of the content processing program 191c is successful, the sub-processor 121 outputs the sum of the received value and the constant #2 to the content processing program 191c (step S115). If the sum of the value output from the main processor 111 in step S114 and the constant #2 included in the content processing program 191c matches the value input from the sub-processor 121, the main processor 111 determines that the authentication of the sub-processor 121 is successful. When the mutual authentication is normally completed as above, the main processor 111 executes the content processing program 191c.

Thus, when the main processor 111 executes the content processing program 191, the sub-processor 121 loads, into the RAM 101, the content processing program 191c in which the codes included in the content processing program 191 and the constants preliminarily stored in a storage area of the secure LSI 120 have been rearranged. Then, performing mutual authentication using the constants included in the loaded content processing program 191c allows determination of whether the content processing program 191c has been tampered with. With this, it is possible to reduce the chance of leaking confidential information, such as a content key, handled by the content processing program 191.

Note that the information processing of the first embodiment is achieved by causing the information processing apparatus 1 to execute a program, as described above. In addition, the information processing of the second embodiment is achieved by causing the terminal 100 to execute a program. Such a program may be recorded in a computer-readable storage medium. Examples of such a computer-readable recording medium include a magnetic disk, an optical disk, a magneto-optical disk, and a semiconductor memory. Examples of the magnetic disk are a floppy disk (FD) and a HDD. Examples of the optical disk are a compact disc (CD), a CD-recordable (CD-R), a CD-rewritable (CD-RW), a digital versatile disc (DVD), a DVD-R, and a DVD-RW.

To distribute the program, for example, the program may be stored in a storage device of a different computer and then distributed via the network 40. For example, a computer stores the program received from the different computer in a storage device (for example, the flash memory 102), and then executes the program by loading it from the storage device. Note however that the computer may directly execute the program received from the different computer via the network 40. In addition, at least part of the above-described information processing may be achieved by an electronic circuit, such as a DSP, an ASIC, and a programmable logic device (PLD).

The foregoing is merely illustrative of the principles of the present invention. Further, numerous modifications and changes will readily occur to those skilled in the art, and therefore, it is not desired to limit the disclosed technology to the exact construction and applications illustrated and described above. Accordingly, all suitable modifications and equivalents may be resorted to, falling within the scope of the present invention determined by appended claims and their equivalents.

### Reference Signs List

- 1: information processing apparatus
- 2: first communication channel
- 3: second communication channel
- 4: encrypted data
- 5: decrypted data
- 6: key
- 10: secure module
- 11: input unit
- 12: memory
- 13: second control circuit
- 20: first control circuit

## Claims

1. An information processing apparatus comprising:
a secure module; and
a first control circuit provided external to the secure module and configured to input encrypted data to the secure module through a first communication channel,
wherein the secure module includes:
a memory configured not to allow the first control circuit to read and write data therefrom and thereto and to store a key for decrypting the encrypted data,
a second control circuit configured to decrypt the encrypted data using the key and output the decrypted data to the first control circuit through the first communication channel, and
an input unit configured to store, in the memory, the key input through a second communication channel provided separately from the first communication channel.

2. The information processing apparatus according to claim 1, wherein:
the encrypted data is a decryption key being encrypted, which is used to decrypt encrypted content data including at least image or audio data; and
the first control circuit receives the decryption key obtained by decrypting the encrypted data from the second control circuit and decrypts the encrypted content data using the received decryption key.

3. The information processing apparatus according to one of claims 1 and 2, wherein:
the memory stores therein an exclusive-use program for executing a process including control of the decryption of the encrypted data; and
the second control circuit includes a processor configured to execute the exclusive-use program.

4. The information processing apparatus according to claim 3, wherein:
the second control circuit receives an encrypted renewal exclusive-use program from the first control circuit, decrypts the encrypted renewal exclusive-use program using the key, and overwrites the exclusive-use program stored in the memory with the decrypted renewal exclusive-use program.

5. The information processing apparatus according to one of claims 1 to 4, wherein:
the second control circuit has a function of outputting a random number, performs, via the first control circuit, a mutual authentication process using the output random number with a transmission apparatus external to the information processing apparatus, which transmission apparatus transmits the encrypted data, and receives the encrypted data via the first control circuit when the mutual authentication process is successful.

6. The information processing apparatus according to one of claims 1 to 5, wherein:
the input unit includes an authentication circuit configured to compare authentication information input through the second communication channel with authentication information preliminarily stored in the secure module, and temporarily allow information input from the second communication channel to be output from the input unit to the memory when the input authentication information matches the stored authentication information.

7. The information processing apparatus according to one of claims 1 to 6, wherein:
the input unit includes a decryption circuit configured to decrypt information input through the second communication channel using input unit-dedicated key information preliminarily stored in the secure module.

8. A semiconductor apparatus comprising:
a secure module; and
a first control circuit provided external to the secure module and configured to input encrypted data to the secure module through a first communication channel,
wherein the secure module includes:
a memory configured not to allow the first control circuit to read data therefrom and write data thereto and to store a key for decrypting the encrypted data,
a second control circuit configured to decrypt the encrypted data using the key and output the decrypted data to the first control circuit through the first communication channel, and
an input unit configured to store, in the memory, the key input through a second communication channel provided separately from the first communication channel.

9. The semiconductor apparatus according to claim 8, wherein:
the encrypted data is a decryption key being encrypted, which is used to decrypt encrypted content data including at least image or audio data; and
the first control circuit receives the decryption key obtained by decrypting the encrypted data from the second control circuit and decrypts the encrypted content data using the received decryption key.

10. The semiconductor apparatus according to one of claims 8 and 9, wherein:
the memory stores therein an exclusive-use program for executing a process including control of the decryption of the encrypted data; and
the second control circuit includes a processor configured to execute the exclusive-use program.

11. The semiconductor apparatus according to claim 10, wherein:
the second control circuit receives an encrypted renewal exclusive-use program from the first control circuit, decrypts the encrypted renewal exclusive-use program using the key, and overwrites the exclusive-use program stored in the memory with the decrypted renewal exclusive-use program.

12. The semiconductor apparatus according to one of claims 8 to 11, wherein:
the second control circuit has a function of outputting a random number, performs, via the first control circuit, a mutual authentication process using the output random number with a transmission apparatus external to the information processing apparatus, which transmission apparatus transmits the encrypted data, and receives the encrypted data via the first control circuit when the mutual authentication process is successful.

13. The semiconductor apparatus according to one of claims 8 to 12, wherein:
the input unit includes an authentication circuit configured to compare authentication information input through the second communication channel with authentication information preliminarily stored in the secure module, and temporarily allow information input from the second communication channel to be output from the input unit to the memory when the input authentication information matches the stored authentication information.

14. The semiconductor apparatus according to one of claims 8 to 13, wherein:
the input unit includes a decryption circuit configured to decrypt information input through the second communication channel using input unit-dedicated key information preliminarily stored in the secure module.
